# FASCICULE DE BREVET EUROPEEN

(11) **EP 3 292 971 B1**
(45) Date de publication et mention de la délivrance du brevet: **27.02.2019**
(21) Numéro de dépôt: 17306157.3
(22) Date de dépôt: 07.09.2017
(51) Int. Cl.: B29C 33/26, B29C 49/56

(54) **DISPOSITIF DE VERROUILLAGE POUR UNE UNITE DE MOULAGE DE RECIPIENTS PAR SOUFFLAGE DE MATIERE THERMOPLASTIQUE**
VERRIEGELUNGSEINHEIT FÜR EINE BLASFORMEINHEIT VON BEHÄLTERN AUS THERMOPLASTISCHEM MATERIAL
LOCKING DEVICE FOR A UNIT FOR BLOW MOULDING THERMOPLASTIC CONTAINERS

(30) Priorité: 07.09.2016 FR 1658285
(43) Date de publication de la demande: 14.03.2018
(73) Titulaire: Sidel Participations, 76930 Octeville-sur-Mer (FR)
(72) Inventeur: MORISSE, Jean-François, 76930 Octeville-sur-mer (FR); LEMAIRE, Cédric, 76930 Octeville-sur-mer (FR)
(74) Mandataire: Grassin d'Alphonse, Emmanuel Jean Marie

(56) Documents cités:
- FR-A1- 2 646 802
- US-A1- 2009 175 978

## Description

### DOMAINE TECHNIQUE DE L'INVENTION

L'invention concerne un dispositif de verrouillage pour une unité de moulage de récipients en matière thermoplastique.

### ÉTAT DE LA TECHNIQUE

L'invention concerne plus particulièrement un dispositif de verrouillage pour une unité de moulage de récipients en matière thermoplastique comportant des moyens de verrouillage qui comportent au moins un doigt de verrouillage.

A titre d'exemple non limitatif, le document FR-2.646.802 décrit un exemple d'un tel dispositif de verrouillage pour une unité de moulage de récipients, en particulier des bouteilles.

Il est connu de l'état de la technique de réaliser une lubrification des doigts de verrouillage d'un tel dispositif de verrouillage d'une unité de moulage afin notamment de réduire les frottements survenant lors du verrouillage et par conséquent les phénomènes d'usure associés.

La lubrification des doigts de verrouillage est réalisée en y appliquant un lubrifiant tel que de la graisse ou de l'huile mais présente des inconvénients.

La lubrification nécessite tout d'abord de procéder à un arrêt de la fabrication de récipients pour permettre l'intervention d'un opérateur et ceci avec une fréquence plus ou moins importante.

La lubrification a donc des conséquences économiques, la durée de l'arrêt est d'autant plus importante que le nombre d'unités de moulage est important, par exemple entre 20 et 40 unités sur certaines machines de soufflage dites rotatives.

La lubrification est ensuite à l'origine d'une « souillure » de l'environnement de fabrication des récipients.

En effet, des projections de lubrifiant se produisent notamment sous l'effet de la force centrifuge lorsque les unités de moulage équipent une machine de soufflage rotative.

Or, on recherche d'une manière générale à maintenir un environnement de fabrication des récipients toujours plus propre comme en témoignent les nombreux moyens déployés depuis la protection aéraulique de l'environnement jusqu'à des opérations de décontamination, en particulier de l'unité de remplissage des récipients.

Dans l'état de la technique, les moyens de verrouillage et tout particulièrement les doigts de verrouillage sont réalisés en acier ou alliages d'acier.

Les matériaux métalliques comme l'acier sont pour l'Homme du métier les seuls matériaux présentant des propriétés mécaniques, notamment de résistance, suffisantes compte tenu des efforts importants subis par les moyens de verrouillage lors de la transformation d'une préforme en un récipient par soufflage ou par étirage-soufflage dans le moule d'une unité de moulage. En effet, les pressions de soufflage sont généralement comprises entre 20 et 40 bars, la pression variant en fonction des applications.

C'est la raison pour laquelle, l'Homme du métier a tenté de remédier aux inconvénients liés à la lubrification en recherchant des traitements de surface susceptibles d'être mis en oeuvre sur des matériaux métalliques comme l'acier utilisé pour la fabrication des doigts de verrouillage.

On a ainsi réalisé des traitements de surface des doigts de verrouillage en métal, en particulier un traitement de type « DLC », acronyme en anglais de « Diamond Like Carbon ».

Un tel traitement avec des matériaux carbonés consiste généralement à obtenir, sur l'extérieur des doigts de verrouillage, un revêtement sous forme de couches minces déposées par des technologies de dépôt sous vide et destiné à en améliorer les propriétés, notamment pour réduire les frottements et/ou accroître la résistance à l'usure.

Un tel traitement « DLC» ne donne cependant pas satisfaction, d'une part, parce qu'une lubrification reste nécessaire (même si l'on en diminue la fréquence) et, d'autre part, parce qu'un tel traitement est particulièrement coûteux.

De plus, il est difficile de maîtriser avec précision les dimensions des doigts de verrouillage présentant un revêtement de type « DLC », lequel revêtement s'avère de surcroît particulièrement fragile, notamment aux chocs.

La présente invention a notamment pour but de résoudre les inconvénients précités de l'état de la technique et de proposer une solution permettant de supprimer la lubrification des doigts de verrouillage.

### BREF RESUME DE L'INVENTION

Dans ce but, l'invention propose un dispositif de verrouillage pour une unité de moulage de récipients en matière thermoplastique, ledit dispositif comportant des moyens de verrouillage qui comportent au moins un doigt de verrouillage, caractérisé en ce que ledit au moins un doigt de verrouillage est en polyétheréthercétone.

Avantageusement, l'utilisation du polyétheréthercétone ou « PEEK » permet de supprimer toute lubrification des doigts de verrouillage.

Le choix d'utiliser du polyétheréthercétone ou « PEEK » va à l'encontre des préjugés techniques de l'Homme du métier qui, en raison des efforts résultant des pressions de soufflage, a jusqu'alors toujours recherché des solutions susceptibles d'être mises en oeuvre sur des doigts de verrouillage en acier ou alliage d'acier, en utilisant de nouveaux traitements de surface comme le « DLC » applicables à de tels matériaux métalliques.

Par comparaison avec l'état de la technique, les interventions de lubrification des doigts de verrouillage sont totalement supprimées, grâce à quoi on élimine notamment toute souillure de l'environnement de fabrication des récipients par des projections de lubrifiant.

Avantageusement, on supprime également les coûts associés auxdites interventions de lubrification auparavant nécessaires, des coûts liés à l'arrêt de la fabrication jusqu'aux coûts de main d'oeuvre.

Un doigt de verrouillage en polyétheréthercétone (PEEK) présente avantageusement une bonne stabilité dimensionnelle, en particulier aux variations de température comme d'humidité.

Avantageusement, l'insert métallique introduit dans le doigt de verrouillage en polyétheréthercétone permet d'obtenir une résistance aux efforts de cisaillement subits par le doigt en position verrouillée lorsqu'une préforme est transformée en récipient par soufflage ou par étirage-soufflage dans l'unité de moulage.

Avantageusement, un doigt en polyétheréthercétone (PEEK) présente une meilleure résistance aux chocs qu'un revêtement DLC, les chocs étant notamment susceptibles d'être absorbés par une déformation du polyétheréthercétone du doigt.

### Selon d'autres caractéristiques de l'invention :

- le doigt de verrouillage comporte au moins un insert ;
- ledit au moins un insert est monté dans au moins un logement interne associé du doigt de verrouillage ;
- ledit au moins un insert est emmanché en force ou fixé par collage dans ledit logement interne ;
- ledit au moins un logement interne s'étend sur au moins une partie du doigt ;
- l'insert est agencé à l'intérieur du doigt de verrouillage de manière à en augmenter la résistance au cisaillement ;
- l'insert est en métal, en particulier en acier ou un alliage d'acier ;
- le dispositif comporte au moins un organe de commande, tel qu'un galet, pour commander sélectivement les moyens de verrouillage entre au moins une position verrouillée et une position déverrouillée ;
- l'organe de commande est apte à commander des moyens d'entraînement des moyens de verrouillage qui sont montés mobiles en coulissement entre lesdites positions verrouillée et déverrouillée ;
- les moyens d'entraînement sont liés en déplacement audit au moins un doigt de verrouillage par l'intermédiaire d'un bras de liaison dont une extrémité est solidaire desdits moyens d'entraînement et dont l'autre extrémité est reçue dans un orifice du doigt de verrouillage.

### BREVE DESCRIPTION DES FIGURES

D'autres caractéristiques et avantages de la présente invention apparaîtront à la lecture de la description détaillée qui va suivre pour la compréhension de laquelle on se reportera aux dessins dans lesquels :
- la figure 1 est une vue de face qui représente un exemple de réalisation d'un dispositif de verrouillage d'une unité de moulage de récipients en position fermée et qui illustre les doigts de verrouillage dudit dispositif en position verrouillée ;
- les figures 2 et 3 sont respectivement une vue de face et une vue en coupe selon un plan III-III vertical médian d'orientation transversale illustré sur la figure 4, les vues représentant un doigt de verrouillage pour un dispositif de verrouillage tel que celui de la figure 1 qui, selon l'invention, est réalisé en polyétheréthercétone, la vue en coupe illustrant plus particulièrement l'insert logé à l'intérieur du doigt ;
- les figures 4 et 5 sont respectivement une vue de côté et une vue en coupe selon un plan V-V vertical médian d'orientation longitudinale illustré sur la figure 2 d'un doigt de verrouillage selon les figures 2 et 3.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, les directions longitudinale et transversale sont déterminées de manière fixe par rapport aux porte-moules d'une unité de moulage de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

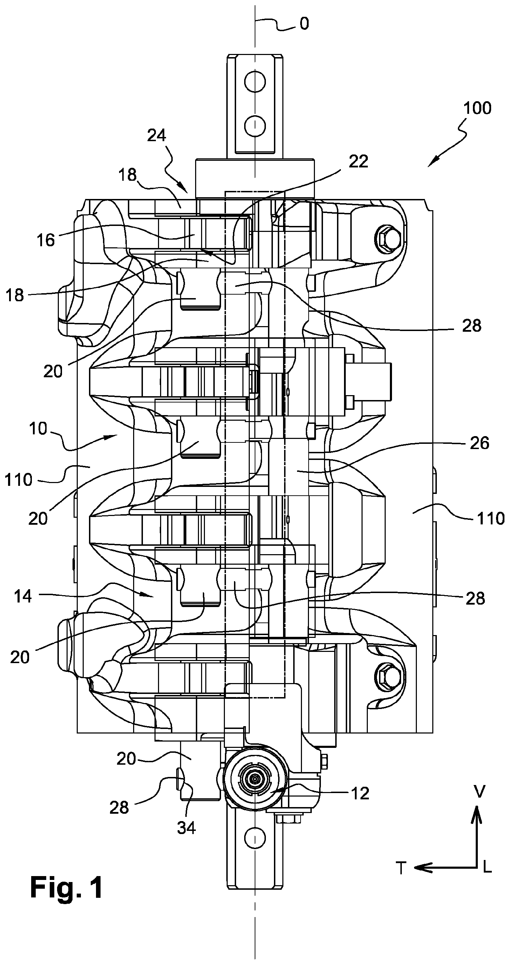

On a représenté sur la figure 1 un exemple de réalisation d'un dispositif 10 de verrouillage pour une unité 100 de moulage de récipients en matière thermoplastique.

De manière connue, une telle unité 100 de moulage est destinée à être montée sur un carrousel d'une machine (non représentée) de fabrication de récipients du type rotative.

L'unité 100 de moulage constitue alors l'un des postes de moulage de la machine qui comporte une série de "n" unités de moulage, réparties angulairement de manière régulière autour du carrousel de la machine.

Chaque unité 100 de moulage comporte un moule pour la fabrication de récipients par soufflage ou par étirage-soufflage à partir de préformes chaudes en matière thermoplastique.

Pour ce faire l'unité 100 de moulage comporte des moyens de soufflage ou d'étirage-soufflage (non représentés), on se reportera par exemple au document FR-2.764.544 pour de plus amples détails sur de tels moyens.

L'unité 100 de moulage comporte deux porte-moules 110 qui sont montés mobiles l'un par rapport à l'autre entre une position ouverte et une position fermée dans laquelle l'unité 100 de moulage est représentée sur la figure 1.

De préférence, l'unité 100 de moulage est supportée par une console destinée à être rapportée à fixation sur un bâti de la machine de moulage.

Plus précisément, les porte-moules 110 sont constitués sous la forme de deux structures porteuses montées pivotantes autour d'un axe O de rotation, l'axe O de rotation s'étendant ici verticalement selon le trièdre (L, V, T).

Chaque porte-moule 110 comporte des moyens d'articulation (non visibles) agencés en arrière, selon la direction longitudinale, de l'unité 100 de moulage.

De préférence, les porte-moules 110 sont susceptibles de s'écarter mutuellement l'un de l'autre en pivotant autour de l'axe O de rotation respectivement entre lesdites positions ouverte et fermée.

En raison de cette cinématique des porte-moules 110, une unité 100 de moulage de ce type est encore appelée moule "portefeuille" (*ou "book-like opening" en anglais*).

A titre d'exemple non limitatif, on se reportera au document FR-2.843.714 qui décrit notamment des moyens de commande pour commander en ouverture/fermeture une unité 100 de moulage de ce type.

Le dispositif 10 de verrouillage de l'unité 100 de moulage comporte au moins un organe 12 de commande des moyens 14 de verrouillage des porte-moules 110.

Le dispositif 10 de verrouillage est agencé longitudinalement en partie avant, soit à l'opposé de l'axe O de rotation et des moyens du dispositif d'ouverture/fermeture de l'unité 100 de moulage.

Le dispositif 10 de verrouillage est destiné à assurer un verrouillage des deux porte-moules 110 en position fermée afin de maintenir l'unité 100 de moulage fermée lors de la fabrication du récipient par soufflage ou par étirage-soufflage d'une préforme.

Dans l'exemple de réalisation, le dispositif 10 de verrouillage comporte deux demi-verrous respectivement de type mâle et de type femelle qui sont associés aux porte-moules 110 et qui sont aptes à coopérer mutuellement pour maintenir l'unité 100 de moulage en position fermée.

Le dispositif 10 de verrouillage a pour fonction d'interdire toute ouverture des porte-moules 110 de manière à maintenir les parties du moule parfaitement jointes lors des opérations de transformation par soufflage ou par étirage-soufflage.

Les demi-verrous comportent chacun au moins une branche saillante, de préférence ici une pluralité de branches 16 simples pour le demi-verrou du porte-moule 110 de gauche et une pluralité correspondante de paires de branches 18 doubles pour le demi-verrou du porte-moule 110 de droite.

Les branches 16 simples, et les branches 18 doubles des demi-verrous sont dirigées transversalement en direction l'une de l'autre et sont mutuellement décalées verticalement de sorte que, en position fermée telle qu'illustrée sur la figure 1, lesdites branches 16 simples et les branches 18 doubles s'interpénètrent.

Ainsi, chaque branche 16 est reçue entre les deux branches 18 doubles qui se positionnent verticalement au dessus et en dessous.

Chacune des branches 18 du demi-verrou de type mâle supporte à coulissement selon la direction verticale un doigt 20 de verrouillage.

Chaque branche 16 simple du demi-verrou de type femelle comporte une ouverture 22 qui, s'étendant verticalement, traverse ladite branche simple à son extrémité libre et chaque branche 18 double du demi-verrou de type mâle comporte une ouverture 24 qui, s'étendant verticalement, traverse ladite branche 18 double à son extrémité libre.

En position fermée telle qu'illustrée sur la figure 1, pour chaque branche 16 simple, l'ouverture 22 de ladite branche 16 simple et les ouvertures 24 desdites branches 18 doubles correspondantes sont alignées selon la direction verticale afin que le doigt 20 de verrouillage correspondant puissent les traverser lesdites ouvertures 22, 24. Le dispositif 10 de verrouillage comporte ici un nombre total de quatre doigts 20 de verrouillage.

Le dispositif 10 de verrouillage comporte des moyens 26 d'entraînement qui sont liés en déplacement, ici en coulissement, aux doigts 20 de verrouillage.

Les moyens 14 de verrouillage sont montés mobiles entre au moins une position verrouillée et une position déverrouillée. Plus précisément, les moyens 14 de verrouillage comportent une partie mobile formée par lesdits doigts 20 de verrouillage et une partie fixe formée par les branches 16 simples et les branches 18 doubles comportant lesdites ouvertures 22 et 24.

Avantageusement, chaque doigt 20 de verrouillage est solidaire d'un bras 28 de liaison qui est lui-même solidaire en déplacement des moyens 26 d'entraînement.

Le coulissement des moyens 26 d'entraînement entre la position verrouillée (position haute) représentée sur la figure 1 et la position déverrouillée (position basse) est commandé par l'organe 12 de commande.

De préférence, l'organe 12 de commande est formé par un galet qui est solidaire des moyens 26 d'entraînement. Les moyens 26 d'entraînement sont par exemple constitués par un arbre.

Dans l'exemple de réalisation, les moyens 14 de verrouillage dispositif 10 de verrouillage de l'unité 100 de moulage sont montés mobiles entre au moins une position verrouillée dans laquelle les porte-moules 110 de l'unité 100 de moulage sont maintenus en position fermée par lesdits moyens 14 de verrouillage, et une position déverrouillée dans laquelle les porte-moules 110 sont libres d'être écartés de la position fermée vers la position ouverte.

L'organe 12 de commande constitué par le galet est destiné à coopérer avec des moyens à came qui, complémentaires, sont aptes à commander les moyens 14 de verrouillage du dispositif 10 de verrouillage entre lesdites positions verrouillée et déverrouillée.

Le dispositif 10 de verrouillage peut comporter des moyens de rappel élastique (non représentés) qui sont aptes à rappeler automatiquement les moyens 14 de verrouillage vers l'une desdites positions, avantageusement vers la position verrouillée.

Les moyens de rappel élastique sont par exemple formés par un ressort de rappel qui est traversé centralement par l'arbre formant les moyens 26 d'entraînement et qui prend appui à l'une de ses extrémités sur une coupelle et à l'autre extrémité sur un support fixé aux moyens 26 d'entraînement et portant l'organe 12 de commande.

Lorsque le dispositif 10 de verrouillage comporte de tels moyens de rappel élastique, l'unité 100 de moulage comporte alors avantageusement un mécanisme de blocage (non représenté) qui est associé au dispositif 10 de verrouillage.

Un tel mécanisme de blocage est destiné à permettre un blocage des moyens 14 de verrouillage en position déverrouillée, lesdits moyens 14 de verrouillage, notamment les moyens 26 d'entraînement, étant sinon automatiquement rappelés par les moyens de rappel élastique vers la position verrouillée.

Avantageusement, le mécanisme de blocage comporte des moyens de blocage, tels qu'un coulisseau, qui sont aptes à être commandés sélectivement entre une position inactive et une position active de blocage dans laquelle lesdits moyens de blocage immobilisent les moyens 14 de verrouillage en position déverrouillée.

Pour de plus amples détails sur la structure et le fonctionnement d'un dispositif 10 de verrouillage comportant des moyens de rappel élastique ainsi qu'un mécanisme de blocage, on pourra par exemple se reporter au document EP-2.292.406.

Les cadences de fabrication des machines de moulage de récipients en matière thermoplastique, tels que des bouteilles en PET, sont particulièrement élevées.

En effet, en fonction du nombre d'unités 100 de moulage de la machine et des caractéristiques des bouteilles fabriquées, en particulier leur contenance, les cadences de fabrication des machines de moulage varient par exemple de 20.000 bph (bouteilles par heure) environ jusqu'à plus de 80.000 bph.

Par conséquent, la résistance à l'usure de pièces comme les doigts 20 de verrouillage du dispositif 10 de verrouillage est particulièrement importante pour garantir la fiabilité de fonctionnement des moyens 14 de verrouillage.

Or les sollicitations des doigts 20 de verrouillage sont importantes compte-tenu de la répétition à de telles cadences des verrouillage et déverrouillage successifs de chaque unité 100 de moulage, l'unité 100 de moulage alternant position fermée et position ouverte au cours du cycle de fabrication d'un récipient comme une bouteille.

C'est la raison pour laquelle, on cherche des solutions pour réduire notamment les frottements entre chaque doigt 20 de verrouillage et lesdites ouvertures 22, 24 correspondantes, et ce faisant en limiter l'usure.

En effet, une usure des doigts 20 de verrouillage est susceptible de provoquer l'apparition de jeu en position verrouillée du dispositif 10 de verrouillage et ce faisant un écartement des parties du moule lors de la fabrication du récipient.

Un tel jeu peut ainsi conduire dans les récipients fabriqués par l'unité 100 de moulage à des défauts au niveau du plan de joint.

Tel qu'expliqué en préambule, la solution connue de l'état de la technique consiste à réaliser une lubrification des doigts de verrouillage afin de limiter les frottements et subséquemment l'usure des doigts de verrouillage.

Toutefois, une telle lubrification présente de nombreux inconvénients depuis la souillure de l'environnement de fabrication par les lubrifiants utilisés jusqu'aux coûts induits par les interventions de lubrification qui nécessitent un arrêt de la fabrication et des moyens humains.

Pour remédier à ces problèmes, l'invention propose un doigt 20 de verrouillage fabriqué en polyétheréthercétone (PEEK).

Grâce à l'utilisation de doigts 20 de verrouillage réalisés en polyétheréthercétone (PEEK) et aux propriétés du matériau, la lubrification des doigts 20 de verrouillage est avantageusement supprimée.

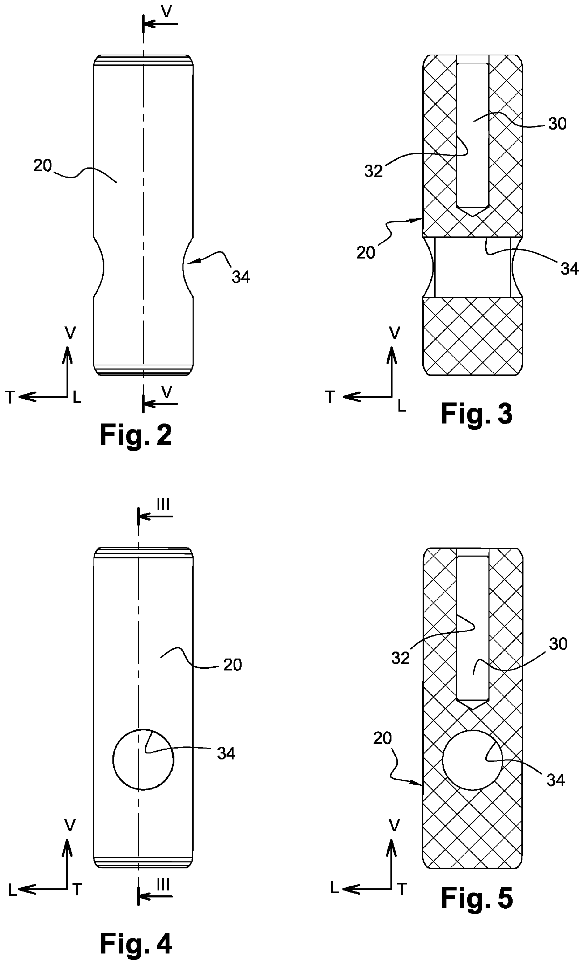

On a représenté en détail sur les figures 2 à 5, un exemple de réalisation d'un tel doigt 20 de verrouillage réalisé en polyétheréthercétone (PEEK).

Le doigt 20 de verrouillage en polyétheréthercétone (PEEK) est notamment, mais non exclusivement, susceptible d'être monté dans un dispositif 10 de verrouillage du type de celui décrit précédemment en référence à la figure 1 et qui n'est donné qu'à titre d'exemple non limitatif.

Avantageusement, le doigt 20 de verrouillage comporte au moins un insert 30 de manière à augmenter la résistance au cisaillement du doigt 20 de verrouillage.

Tel qu'illustré par les vues en coupe des figures 3 et 5, ledit au moins un insert 30 est agencé à l'intérieur du doigt 20 de verrouillage.

Dans l'exemple de réalisation, le doigt 20 de verrouillage présente globalement une forme cylindrique et l'insert 30 s'étend suivant un axe principal du doigt 20 de verrouillage.

L'insert 30 est agencé au centre du doigt 20 de verrouillage suivant ledit axe principal et s'étend ici suivant la direction verticale, c'est à dire selon la direction de coulissement du doigt 20 de verrouillage entre lesdites positions verrouillée et déverrouillée.

Dans l'exemple de réalisation, le doigt 20 de verrouillage comporte préférentiellement un seul insert 30 présentant une forme générale de goupille.

De préférence, l'insert 30 est en métal. Avantageusement, l'insert 30 est en acier ou dans un alliage d'acier.

L'insert 30 est monté dans un logement 32 interne qui est ménagé dans le doigt 20 de verrouillage. Le logement 32 de l'insert 30 est un trou borgne qui est par exemple obtenu par un perçage du doigt 20 de verrouillage.

L'insert 30 est par exemple emmanché en force dans ledit logement 32 interne. En variante, l'insert 30 est fixé par collage à l'intérieur du logement 32 interne ou par tout autre moyen équivalent permettant de le bloquer, l'immobiliser en position à l'intérieur du logement 32 interne.

Dans l'exemple de réalisation, le logement 32 interne s'étend sur au moins une partie du doigt 20 de verrouillage.

L'insert 30 s'étend verticalement sur une partie du doigt 20 de verrouillage correspondant au moins à la partie du doigt 20 de verrouillage qui pénètre en position verrouillée dans les ouvertures 24 des branches 18 doubles et dans l'ouverture 22 de la branche 16 simple correspondant audit doigt 20 de verrouillage.

Le doigt 20 de verrouillage comporte un orifice 34 dans lequel est monté une extrémité du bras 28 de liaison avec l'arbre formant les moyens 26 d'entraînement. L'orifice 34 est réalisé dans l'autre partie du doigt 20 de verrouillage ne comportant pas ledit insert 30.

Le logement 32 s'étend verticalement, suivant l'axe principal du doigt 20 de verrouillage, globalement de l'une inférieure de ses extrémités jusqu'au voisinage de l'autre partie du doigt 20 de verrouillage comportant ledit orifice 34.

Chaque bras 28 de liaison est ainsi solidaire à une extrémité desdits moyens 26 d'entraînement et à l'autre extrémité du doigt 20 de verrouillage.

Un doigt 20 de verrouillage en polyétheréthercétone (PEEK) présente une masse bien inférieure à celle d'un doigt 20 de verrouillage réalisé en acier.

L'invention permet de réduire la masse totale d'une unité 100 de moulage équipée d'un dispositif 10 de verrouillage comportant des doigts 20 de verrouillage en polyétheréthercétone (PEEK).

On améliore donc également le fonctionnement d'une machine de moulage de type rotative comportant des telles unités 100 de moulage en limitant les problèmes liés à l'inertie et qui résultent des vitesses d'entraînement en rotation du carrousel nécessaire pour atteindre des cadences de fabrication toujours plus élevées.

## Revendications

1. Dispositif (10) de verrouillage pour une unité (100) de moulage de récipients en matière thermoplastique, ledit dispositif (10) comportant des moyens (14) de verrouillage qui comportent au moins un doigt (20) de verrouillage, **caractérisé en ce que** ledit au moins un doigt (20) de verrouillage est en polyétheréthercétone (PEEK).

2. Dispositif selon la revendication 1, **caractérisé en ce que** le doigt (20) de verrouillage comporte au moins un insert (30).

3. Dispositif selon la revendication 2, **caractérisé en ce que** ledit au moins un insert (30) est monté dans au moins un logement (32) interne associé du doigt (20) de verrouillage.

4. Dispositif selon la revendication 3, **caractérisé en ce que** ledit au moins un insert (30) est emmanché en force ou fixé par collage dans ledit logement (32) interne.

5. Dispositif selon la revendication 3 ou 4, **caractérisé en ce que** ledit au moins un logement (32) interne s'étend sur au moins une partie du doigt (20) de verrouillage.

6. Dispositif selon l'une quelconque des revendications 2 à 5, **caractérisé en ce que** l'insert (30) est agencé à l'intérieur du doigt (20) de verrouillage de manière à en augmenter la résistance au cisaillement.

7. Dispositif selon l'une quelconque des revendications 2 à 6, **caractérisé en ce que** l'insert (30) est en métal, en particulier en acier ou un alliage d'acier.

8. Dispositif selon l'une quelconque des revendications précédentes, **caractérisé en ce que** le dispositif (10) comporte au moins un organe (12) de commande, tel qu'un galet, pour commander sélectivement les moyens (14) de verrouillage entre au moins une position verrouillée et une position déverrouillée.

9. Dispositif selon la revendication 8, **caractérisé en ce que** l'organe (12) de commande est apte à commander des moyens (26) d'entraînement des moyens (14) de verrouillage qui sont montés mobiles en coulissement entre lesdites positions verrouillée et déverrouillée.

10. Dispositif selon la revendication 9, **caractérisé en ce que** les moyens (26) d'entraînement sont liés en déplacement audit au moins un doigt (20) de verrouillage par l'intermédiaire d'un bras (28) de liaison dont une extrémité est solidaire desdits moyens (26) d'entraînement et dont l'autre extrémité est reçue dans un orifice (34) du doigt (20) de verrouillage.

## Patentansprüche

1. Verriegelungsvorrichtung (10) für eine Formeinheit (100) für Behälter aus thermoplastischem Material, wobei die Vorrichtung (10) Verriegelungsmittel (14) umfasst, die mindestens einen Verriegelungsfinger (20) umfassen, **dadurch gekennzeichnet, dass** der mindestens eine Verriegelungsfinger (20) aus Polyetheretherketon (PEEK) besteht.

2. Vorrichtung nach Anspruch 1, **dadurch gekennzeichnet, dass** der Verriegelungsfinger (20) mindestens ein Einsatzteil (30) umfasst.

3. Vorrichtung nach Anspruch 2, **dadurch gekennzeichnet, dass** das mindestens eine Einsatzteil (30) in mindestens einer zum Verriegelungsfinger (20) gehörenden inneren Aufnahme (32) montiert ist.

4. Vorrichtung nach Anspruch 3, **dadurch gekennzeichnet, dass** das mindestens eine Einsatzteil (30) in der inneren Aufnahme (32) eingepresst oder durch Kleben befestigt ist.

5. Vorrichtung nach Anspruch 3 oder 4, **dadurch gekennzeichnet, dass** sich die mindestens eine innere Aufnahme (32) über mindestens einen Teil des Verriegelungsfingers (20) erstreckt.

6. Vorrichtung nach einem der Ansprüche 2 bis 5, **dadurch gekennzeichnet, dass** das Einsatzteil (30) im Inneren des Verriegelungsfingers (20) so angeordnet ist, dass es die Scherfestigkeit erhöht.

7. Vorrichtung nach einem der Ansprüche 2 bis 6, **dadurch gekennzeichnet, dass** das Einsatzteil (30) aus Metall besteht, insbesondere aus Stahl oder einer Stahllegierung.

8. Vorrichtung nach einem der vorhergehenden Ansprüche, **dadurch gekennzeichnet, dass** die Vorrichtung (10) mindestens ein Steuerorgan (12) wie etwa eine Rolle umfasst, um die Verriegelungsmittel (14) selektiv zwischen mindestens einer Verriegelungsposition und einer Entriegelungsposition zu steuern.

9. Vorrichtung nach Anspruch 8, **dadurch gekennzeichnet, dass** das Steuerorgan (12) dazu geeignet ist, Antriebsmittel (26) der Verriegelungsmittel (14) zu steuern, die gleitbeweglich zwischen der Verriegelungs- und Entriegelungsposition montiert sind.

10. Vorrichtung nach Anspruch 9, **dadurch gekennzeichnet, dass** die Antriebsmittel (26) mittels eines Verbindungsarms (28), dessen eines Ende mit den Antriebsmitteln (26) fest verbunden ist und dessen anderes Ende in einer Öffnung (34) des Verriegelungsfingers (20) aufgenommen wird, beim Verschieben mit mindestens einem Verriegelungsfinger (20) verbunden sind.

## Claims

1. Locking device (10) for a unit (100) for moulding containers made of thermoplastic material, said device (10) including locking means (14) that include at least one locking finger (20), **characterized in that** said at least one locking finger (20) is made of polyetheretherketone (PEEK) .

2. Device according to Claim 1, **characterized in that** the locking finger (20) includes at least one insert (30).

3. Device according to Claim 2, **characterized in that** said at least one insert (30) is mounted in at least one internal housing (32) associated with the locking finger (20).

4. Device according to Claim 3, **characterized in that** said at least one insert (30) is force-fitted or glued into said internal housing (32).

5. Device according to Claim 3 or 4, **characterized in that** said at least one internal housing (32) extends over at least a portion of the locking finger (20).

6. Device according to any one of Claims 2 to 5, **characterized in that** the insert (30) is arranged inside the locking finger (20) so as to increase its shear strength.

7. Device according to any one of Claims 2 to 6, **characterized in that** the insert (30) is made of metal, in particular of steel or an alloy of steel.

8. Device according to any one of the preceding claims, **characterized in that** the device (10) includes at least one actuator element (12), such as a roller, to actuate the locking means (14) selectively between at least a locked position and an unlocked position.

9. Device according to Claim 8, **characterized in that** the actuator element (12) is adapted to actuate means (26) for driving the locking means (14) that are mounted to move by sliding between said locked and unlocked positions.

10. Device according to Claim 9, **characterized in that** the drive means (26) are connected in movement to said at least one locking finger (20) by means of a connecting arm (28) one end of which is fastened to said drive means (26) and the other end of which is received in an opening (34) of the locking finger (20).
